# EUROPEAN PATENT APPLICATION

(11) **EP 1 628 137 A1**
(43) Date of publication of application: **22.02.2006**
(21) Application number: 04771144.5
(22) Date of filing: 03.08.2004
(51) Int. Cl.: G01N 35/00, G01N 37/00, G01N 33/48, C12M 1/00, B01J 19/00

(54) **SAMPLE ANALYZER AND DISK-LIKE SAMPLE ANALYZING MEDIUM**

(30) Priority: 05.08.2003 JP 2003286825
(71) Applicant: TAIYO YUDEN CO., LTD., Tokyo 110-0005 (JP)
(72) Inventor: HAGIWARA, Naoto, Taito-ku, Tokyo 110-0005 (JP)
(74) Representative: Piésold, Alexander James
(86) International application number: PCT/JP2004/011090
(87) International publication number: WO 2005/012916

(57) **Abstract**

A sample analyzer capable of efficiently heating only a specified portion on the surface of a disk by a simple external heating means and a disk-like sample analyzing medium. An analyzing area (3) and an optical recording area (7) are formed on a disk-like substrate (1), and a light absorbing layer (12) and light reflecting layers (11) are disposed in the analyzing area (3) to form a high temperature zone (4) and low temperature zones (5). In the high temperature zone (4), heating occurs since irradiated electromagnetic wave hits the light absorbing layer (12), and in the low temperature zone (5), a temperature rise is suppressed since the electromagnetic wave is reflected on the light reflecting layers (11) and heat conduction is increased. Accordingly, a thermal cycle can be provided to a sample liquid by feeding the specimen liquid to a flow passage (6) formed so as to alternately meander between the high temperature zone (4) and the low temperature zone (5) so that various reactions can be performed.

## Description

### TECHNICAL FIELD

The present invention relates to a sample analyzer and a disk-like sample analyzing medium that are suitably usable in time of analysis of a sample in the field of chemistry, biology, biochemistry, or the like. More specifically, the present invention relates to a sample analyzer and a disk-like sample analyzing medium, in which a sample is introduced into a flow passage formed in an analyzing area of a disk-like substrate, the flow passage of the disk-like substrate having a high temperature zone and a low temperature zone by means of an external heating means and the disk being rotated, thereby analyzing the sample flowing in the flow passage by a centrifugal force resulting from the rotation.

### BACKGROUND ART

In recent years, disks for analysis, which enable to efficiently perform the analysis of a sample by forming a minute flow passage in a disk-like substrate and feeding a sample liquid or a reagent to the flow passage so that a reaction is performed in the flow passage, have been developed.

These disks for analysis have such advantages that (i) it is possible to perform transport/separation of a sample by utilizing a centrifugal force generated through the rotation of the disk, (ii) it is possible to analyze many samples with one disk by providing a plurality of flow passages for a disk-like substrate, (iii) it becomes possible, by providing an optical recording area for a disk-like substrate and inputting pre-determined analytical conditions and the like in the optical recording area, to perform a sample analysis under given analytical conditions and also to automate an analysis, and (iv) it becomes possible, by recording sample information and results of the analysis in the optical recording area, to carry out with one disk a series of operations from for sample analysis to for storage of results from analysis, which are considered to be in greatly increasing utility value as an analyzingmeans for expectations in the field of chemistry, biology, biochemistry, or the like.

Uptonow, as the disk for analysis described above, for instance, the following Patent Document 1 discloses a centripetally-motivated fluid micromanipulation apparatus that is a combination of a microsystem platform, including a substrate having a first flat, planar surface and a second flat, planar surface opposite thereto, in which the first surface includes a multiplicity of microchannels embedded therein and a sample input means, in which the sample input means and the microchannels are connected and in fluidic contact and in which the second flat, planar surface opposite to the first flat planar surface of the platform is encoded with an eletromagnetically-readable instruction set for controlling rotational speed, duration, or direction of the platform, and a micromanipulation device, including a base, a rotating means, a power supply and user interface and operations controlling means, in which the rotating means is functionally linked to the microsystem platform and in rotational contact therewith, in which a large volume of a fluid within the microchannels of the platform is moved through the microchannels by a centripetal force arising from rotational motion of the platform for a time and a rotational velocity sufficient to move the fluid through the microchannels.

Also, Patent Document 2 discloses an optical disk that is adapted to be read by a CD-ROM or DVD reader to be used in time of optical analysis of a biological, chemical, or biochemical sample, the optical disk including: one or multiple compartments formed in the optical disk; a sample supporting surface which is positioned in at least one compartment and on which the biological, chemical, or biochemical sample can be disposed in order to perform the optical analysis; a sample entrance port that is fluidly coupled to the sample supporting surface in the optical disk; and a control information region containing encoded information, in which both of the sample supporting surface and the control information region are directed in the same direction with respect to the optical disk, thereby allowing optical analysis for both of the sample supporting surface and the control information region to be carried out by the same CD-ROM or DVD reader.
Patent Document 1: JP 2002-503331 A
Patent Document 2: JP 3356784 B

### DISCLOSURE OF THE INVENTION

### PROBLEMS TO BE SOLVED BY THE INVENTION

In each of the disks for analysis described above, since a reaction is performed in the flow passage formed in the disk, it is necessary to heat a specified portion of the disk for analysis.

Therefore, the disk for analysis disclosed in the above-mentioned Patent Document 1 includes a mechanism in which wiring is installed on the disk and heating is performed using a heating wire, a thermoelectric element, or the like. Because of the structure in which the transfer of the liquid is performed through the rotation of the disk, however, when electric power is supplied to the disk, it is required to use a rotating electrode for the electric power supply.

Also, in the case of the disk for analysis disclosed in the above-described Patent Document 2, in which a battery for electric power supply is formed on the disk, regulation of the electric power supply requires a special mechanism.

Accordingly, an object of the present invention is to provide a sample analyzer and a disk-like sample analyzing medium, in which it becomes possible to efficiently heat only a specified portion on the surface of a disk by a simple external heating means.

### MEANS FOR SOLVING THE PROBLEM

To attain the above-mentioned object, a sample analyzer according to the present invention is characterized by comprising: a disk-like sample analyzing medium including a flow passage to which a sample to be analyzed is introduced, the flow passage being formed in a disk-like substrate; a disk rotating means for supporting and rotating the disk-like sample analyzing medium to cause the sample introduced into the flow passage to flow by a centrifugal force; a heating means for heating the disk-like sample analyzing medium to form zones having different temperatures; and an inspection light irradiating means for irradiating the flow passage of the disk-like sample analyzing medium with inspection light to analyze the sample, wherein the sample flowing in the flow passage passes through the zones having the different temperatures formed by the heating means.

With the sample analyzer according to the present invention, it becomes possible, by the external heating means without providing an internal heating means in the disk-like sample analyzing medium, to heat a specified area of the disk-like sample analyzing medium provided with the flow passage. Also, it becomes possible to give a temperature change necessary for the analysis, every time the sample goes from one to another of the zones having the different temperatures in the substrate formed by said heating, to the sample flowing in the flow passage by the centrifugal force.

In the sample analyzer according to the present invention, it is preferable that the zones having the different temperatures are divided with reference to a predetermined temperature into a high temperature zone, whose temperature is higher than the predetermined temperature, and a low temperature zone, whose temperature is lower than the predetermined temperature, and the sample flowing in the flow passage repeatedly passes through the high temperature zone and the low temperature zone.

With this embodiment, it becomes possible to repeatedly give temperature changes to the sample, where a predetermined temperature is set as a threshold value, to cause reversible and/or irreversible changes in state of the sample.

Further, in one embodiment of the sample analyzer according to the present invention, it is characterized in that the heating means is constructed using an electromagnetic wave irradiating means and the inspection light irradiating means is constructed using a laser light irradiating means.

With this embodiment, it becomes possible to achieve a structure in which the heating means for heating the disk-like sample analyzingmedium is not in contact with the disk-like sample analyzing medium. Also, it becomes possible to achieve a structure in which the inspection light irradiating means for optically measuring the state of the sample in the flow passage is not in contact with the disk-like sample analyzing medium.

Further, the sample analyzer according to another aspect of the present invention is characterized in that the electromagnetic wave irradiating means and the laser light irradiating means are disposed so as to irradiate the disk-like sample analyzing medium from different surface sides, respectively.

With this embodiment, it becomes possible to prevent peripheral circuits, such as a laser drive, from being heated by the electromagnetic wave irradiating means.

Further, the sample analyzer according to another aspect of the present invention is characterized in that the electromagnetic wave irradiating means and the laser light irradiating means are disposed so as to irradiate the disk-like sample analyzing medium from the same surface sides, respectively.

With this embodiment, when an already-existing device, such as a CD drive, is used as a mounting means for the disk-like sample analyzing medium, little modify of it is required to be utilized, which makes it possible to reduce the cost for the mounting means.

It is preferable that, in the sample analyzer according to the present invention, the electromagnetic wave irradiating means includes a plurality of light sources.

With this embodiment, it becomes possible to reduce the size of each light source and to attach the light source to the back of a case of the sample analyzer or the like, resulting in an easy installation of the light source. Also, it becomes possible to evenly irradiate the disk-like sample analyzing medium. Further, it becomes possible to control an irradiated light amount or the distribution of the irradiated light amount through the output adjustment or ON/OFF of each light source.

In addition, it is preferable that, in the sample analyzer according to the present invention, the electromagnetic wave irradiating means has one of a line-like shape, a ring-like shape, and an arc-like shape.

With this embodiment, it becomes possible to efficiently irradiate the entire surface of the disk-like sample analyzing medium, which is rotated by the disk rotating means, with the electromagnetic wave. Also, when the electromagnetic wave irradiating means has a ring-like shape or an arc-like shape, even in case with speed of rotation of the disk for generating a centrifugal force, which causes the sample to flow in the flow passage formed in the disk-like sample analyzing medium, being changed arbitrarily, it becomes possible to maintain the uniformity of the distribution of the irradiated light amount with respect to same-diameter peripheral areas whose distances from the center of the disk-like sample analyzing medium are approximately the same. Further, by changing the width of the ring shape or the arc shape of the electromagnetic wave irradiating means, it becomes possible to efficiently irradiate a limited area of the disk-like sample analyzing medium with the electromagnetic wave, and to prevent a situation where the heating of the disk heats unnecessary portions and a situation where the heating of the disk excessively heats necessary portions.

On the other hand, the disk-like sample analyzing medium according to the present invention is applied to the sample analyzer, and is characterized by comprising: a disk-like substrate; and a flow passage to which a sample to be analyzed is introduced, the flow passage being formed in the disk-like substrate, wherein the flow passage is formed in a shape with which, when the sample has been introduced and the disk-like substrate is rotated, the sample flows along the flow passage by a centrifugal force and repeatedly passes through the zones having the different temperatures formed by the heating means.

With the disk-like sample analyzing medium according to the present invention, it becomes possible, by a simple external heating means without providing an internal heating means in the disk-like substrate, to heat a specified area of the disk-like substrate provided with the flow passage. Also, it becomes possible to give a temperature change necessary for the analysis, every time the sample goes from one to another of the zones having the different temperatures in the substrate formed by said heating, to the sample flowing in the flow passage by the centrifugal force.

Further, the disk-like sample analyzing medium according to another aspect of the present invention is characterized in that the zones having the different temperatures are divided with reference to a predetermined temperature into a high temperature zone, whose temperature is higher than the predetermined temperature, and a low temperature zone, whose temperature is lower than the predetermined temperature, and a light absorbing layer that absorbs light irradiated from the electromagnetic wave irradiating means is provided for the high temperature zone.

With this embodiment, the light absorbing layer disposed in the high temperature zone of the disk-like substrate absorbs energy, such as an electromagnetic wave, which is given in a non-contact manner and performs heating, so that the high temperature zone is relatively heated as compared with the low temperature zone in which with no light absorbing layer is provided. As a result, by irradiating the entire surface of the rotating disk-like sample analyzing medium with an electromagnetic wave or the like, it becomes possible to easily form the high temperature zone and the low temperature zone on the disk-like sample analyzing medium. Also, it becomes attainable to have a means for giving temperature changes to the sample, where a predetermined temperature is set as a threshold value, to cause reversible and/or irreversible changes in state of the sample.

Further, the disk-like sample analyzing medium according to another aspect of the present invention is characterized in that the zones having the different temperatures formed in the disk-like substrate are divided with reference to a predetermined temperature into a high temperature zone, whose temperature is higher than the predetermined temperature, and a low temperature zone, whose temperature is lower than the predetermined temperature, and a light reflecting layer that reflects light irradiated from the electromagnetic wave irradiating means is provided for the low temperature zone.

With this embodiment, the light reflecting layer disposed in the low temperature zone of the disk-like substrate reflects energy, such as an electromagnetic wave, which is given in a non-contact manner, so that the increase in temperature in the low temperature zone is relatively suppressed as compared with the high temperature zone in which no light reflecting layer is provided. As a result, by irradiating the entire surface of the rotating disk-like sample analyzing medium with an electromagnetic wave or the like, it becomes possible to easily form the high temperature zone and the low temperature zone in the disk-like substrate constituting the disk-like sample analyzing medium. Also, it becomes attainable to have a means for giving temperature changes to the sample, where a predetermined temperature is set as a threshold value, to cause reversible and/or irreversible changes in state of the sample.

In the disk-like sample analyzing medium according to the present invention, the light absorbing layer and/or the light reflecting layer is preferably disposed across both of the high temperature zone and the low temperature zone.

With this embodiment, since the light absorbing layer and the light reflecting layer are disposed on one disk-like substrate, it becomes possible to give further increased difference in temperature between the high temperature zone and the low temperature zone. Also, it is possible to form the light absorbing layer and the light reflecting layer in such overlapping manner that: the light absorbing layer is disposed in the high temperature zone of the disk-like substrate so as to function, without being inhibited by the light reflecting layer, in absorbing energy such as an electromagnetic wave given in a non-contact manner; and concurrently the light reflecting layer is disposed in the low temperature zone of the disk-like substrate so as to function, without being inhibited by the light absorbing layer, in reflecting the energy such as an electromagnetic wave given in a non-contact manner. Therefore it becomes possible to diminish the requirement rate in accuracy for patterning and reduce the number of manufacturing steps, which makes it possible to lessen the cost in manufacturing of the disk-like sample analyzing medium.

Further, in one embodiment of the disk-like sample analyzing medium according to the present invention, it is characterized in that a recording area and an analyzing area are further provided for the disk-like substrate, and in that pre-pits or pre-grooves are formed in the recording area, while the analyzing area including the high temperature zone and the low temperature zone.

With this embodiment, it becomes possible to form in the recording area a recording layer having pre-pits or pre-grooves for recording sample information, analytical conditions, results from analysis, or the like, and to perform with one disk a series of operations, from for sample analysis to for storage of results from analysis. Also, the light absorbing layer is disposed across both of the recording area and the analyzing area while the light reflecting layer is disposed in portions other than the high temperature zone. Thus, an increase in temperature occurs in the high temperature zone because of the light absorbing layer absorbing heat while the corresponding increase in temperature is suppressed in the low temperature zone and the recording area because of the light reflecting layer suppressing heat absorption. Further, since it is possible to form a reflecting layer in the recording area, the reflecting layer being in charge of the light reflecting layer, the structure of disk is simplified. Still further, since it is possible to form a dye containing layer in the recording area, the dye containing layer being in charge of the light absorbing layer, the structure of layers on the disk is simplified.

### EFFECTS OF THE INVENTION

With the sample analyzer according to the present invention, it becomes possible, by the external heating means without providing an internal heating means in the disk-like sample analyzing medium, to heat a specified area of the disk-like sample analyzing medium provided with the flow passage. Also, it becomes possible to give a temperature change necessary for the analysis, every time the sample goes from one to another of the zones having the different temperatures in the substrate formed by said heating, to the sample flowing in the flow passage by the centrifugal force.

Also, in a preferable embodiment of the disk-like sample analyzing medium according to the present invention, when the light absorbing layer having a tendency to absorb an electromagnetic wave (mainly, light) is disposed in the high temperature zone of the disk-like substrate constituting the disk-like sample analyzing medium, and/or the light reflecting layer having a tendency to reflect the electromagnetic wave is disposed in the low temperature zone thereof, it becomes possible to form, by means of a simple external heating means that performs radiation of an electromagnetic wave, temperature zones that are divided with reference to a predetermined temperature on the disk-like sample analyzing medium. As a result, no electric power for heating of a specified area is required to be supplied to the disk-like sample analyzing medium, which makes it possible to simplify the structure of the disk-like sample analyzingmedium. Also, even when the entire surface of the disk-like sample analyzing medium is irradiated with the electromagnetic wave, it is possible to efficiently heat only the high temperature zone, without necessity of irradiation of only a specified area with the electromagnetic wave, which leads to simplify the construction of the heating means.

Further, in a preferable mode of the sample analyzer according to the present invention, when the electromagnetic wave irradiating means includes multiple light sources, it becomes possible to control an irradiated light amount or the distribution of the irradiated light amount through output adj ustment or ON/OFF of each light source. Also, when each light source has a ring-like shape or an arc-like shape, even in case with speed of rotation of the disk for generating a centrifugal force, which causes the sample to flow in the flow passage formed in the disk-like sample analyzing medium, being changed arbitrarily, it becomes possible to maintain the uniformity of the distribution of the irradiated light amount with respect to same-diameter peripheral areas whose distances from the center of the disk-like sample analyzing medium are approximately the same.

Accordingly, with the constructions described above, it becomes possible to more simply perform a chemical reaction, a biochemical reaction, or the like, in which temperature control on a rotating disk is required.

### BRIEF DESCRIPTION OF THE DRAWINGS

FIG. 1 is a plan view of a disk-like sample analyzing medium showing an embodiment of the present invention.
FIG. 2 is an enlarged schematic diagram of a flow passage formed in the disk-like sample analyzing medium.
FIG. 3(a) is a schematic diagram of a cross section of the disk-like sample analyzing medium, and FIG. 3(b) is a schematic diagram of a cross section of a sample introducing opening and a liquid reservoir portion formed in the disk-like sample analyzing medium.
FIG. 4 is an explanatory diagram showing each form of disposition of a light absorbing layer and a light reflecting layer in a high temperature zone and a low temperature zone.
FIG. 5 is an explanatory diagram showing each form of disposition of a light absorbing layer and a light reflecting layer in a high temperature zone and a low temperature zone.
FIG. 6 is a plan view of a disk-like sample analyzing medium showing another embodiment of the present invention.
FIG. 7 is an enlarged schematic diagram of a flow passage formed in the disk-like sample analyzing medium.
FIG. 8 is a schematic construction diagram showing an embodiment of the sample analyzer according to the present invention.
FIG. 9 is an explanatory diagram showing a mode of an electromagnetic wave irradiating means.
FIG. 10 is a schematic diagram of a disk-like substrate constituting the disk-like sample analyzing medium according to the present invention.
FIG. 11 is a schematic diagram showing an embodiment of the sample analyzer according to the present invention.
FIG. 12 is a schematic diagram showing another embodiment of the sample analyzer according to the present invention.

### DESCRIPTION OF REFERENCE NUMERALS

1. disk-like substrate
2. center hole
2a. pouring opening
3. analyzing area
4. high temperature zone
5. low temperature zone
6. flow passage
6a. sample introducing opening
6b. liquid reservoir portion
7. optical recording area
8. cover
10, 20. disk-like sample analyzing medium
11. light reflecting layer
12. light absorbing layer
13. protective layer
30. electromagnetic wave irradiating means
31. reflecting plate
32. laser light irradiating means
33. disk rotating means
40. concave portion
41a, 41b, 41c. thermocouple
42. light-receiving means
43a, 43b, 43c. heater line

### DESCRIPTION OF THE PREFERED EMBODIMENTS

Hereinafter, a sample analyzer and a disk-like sample analyzing medium according to the present invention will be described in detail with reference to the drawings.

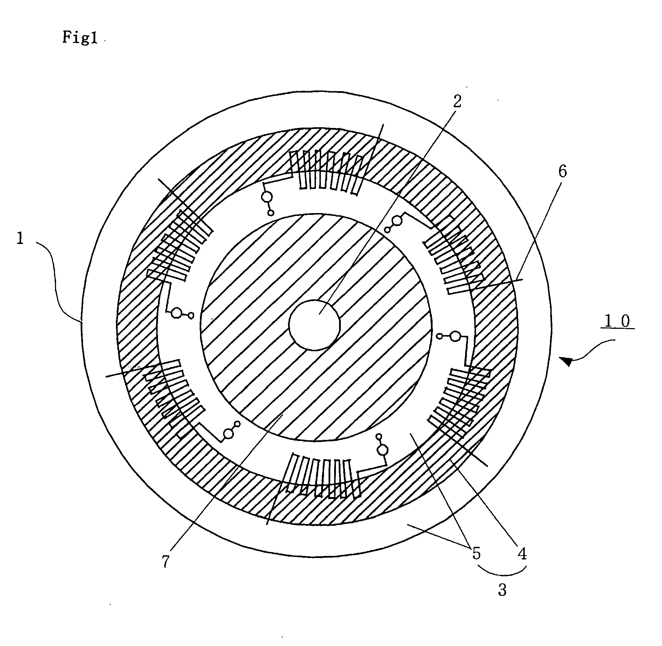

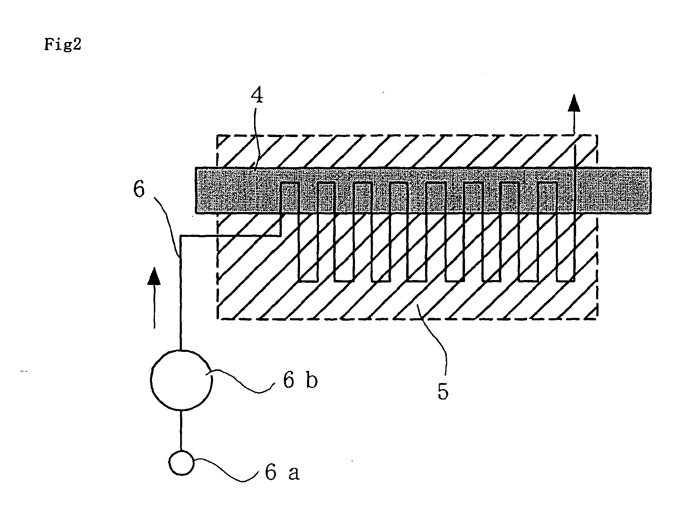

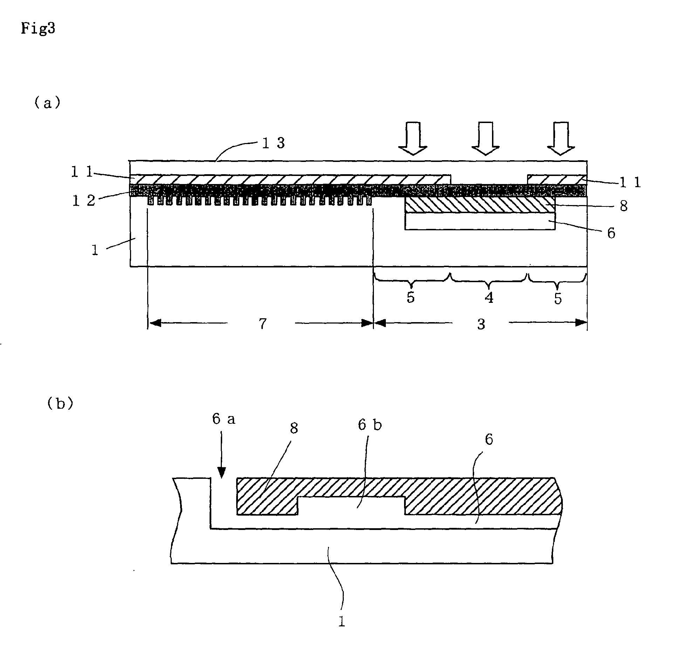

In FIGS. 1 to 3, an embodiment of the disk-like sample analyzing medium according to the present invention is shown. FIG. 1 is a plan view of the disk-like sample analyzing medium, FIG. 2 is an enlarged schematic diagram of a flow passage formed in the disk-like sample analyzing medium, and FIG. 3 is a schematic diagram of a cross section of the disk-like sample analyzing medium.

As shown in FIG. 1, a disk-like sample analyzing medium 10 includes an analyzing area 3 having a multiple of flow passages 6 formed in an outer peripheral area of a surface on one side of a disk-like substrate 1 and an optical recording area 7 formed in an inner peripheral area adjacent to the analyzing area 3, and a center hole 2 for holding the disk is formed in a further inner peripheral portion with respect to the optical recording area 7.

In the analyzing area 3, a low temperature zone 5, a high temperature zone 4, and a low temperature zone 5 are formed alternately in a concentric manner in the stated order from the center side of the disk-like substrate 1 in a radial direction, where the low temperature zones 5 are respectively formed in an inner peripheral area and an outer peripheral area, each bordering the high temperature zone 4.

The multiple of flow passages 6 are formed in a circumferential direction (tangential direction) of the disk-like substrate 1 so as to alternately meander between the high temperature zone 4 and the low temperature zone 5. Accordingly, as shown in FIG. 2, a sample liquid introduced from a sample introducing opening 6a, that is provided in the flow passage 6 on the center side of the disk-like substrate 1, is reserved in a liquid reservoir portion 6b existing in an immediately downstream position, moves in the flow passage 6 by a centrifugal force resulting from the rotation of the disk, and passes through the high temperature zone 4 and the low temperature zone 5 alternately with multiple times.

With this embodiment, by forming the high temperature zone 4, the low temperature zone 5, and the flow passage 6 at respective predetermined radial positions of the disk-like substrate, it becomes possible to eliminate the necessity of positioning in an angular direction and alleviate required rate in accuracy.

As shown in FIG. 3 (a), the flow passage 6 is formed by covering a groove formed in a predetermined shape in a surface on one side of the disk-like substrate 1 with a cover 8. Also, in each of the high temperature zone 4 and the low temperature zone 5, a light absorbing layer 12 and/or a light reflecting layer 11 are disposed. In this embodiment, by disposing the light absorbing layer 12 and the light reflecting layer 11 on the surface on one side of the disk-like substrate 1, the high temperature zone 4 and the low temperature zone 5 are formed. That is, the light absorbing layer 12 is disposed on the cover 8, the light reflecting layer 11 is disposed thereon so that a part of the light absorbing layer 12 is exposed, and a protective layer 13 for preventing degradation of the light absorbing layer 12 and the light reflecting layer 11 is formed further thereon. Accordingly, as shown in the drawing, by irradiating an electromagnetic wave from the side of the protective layer 13, the exposed light absorbing layer 12 absorbs the electromagnetic wave and generates heat in the high temperature zone 4 and the light reflecting layer 11 reflects the electromagnetic wave and the increase in temperature is suppressed in the low temperature zone 5.

Also, in the optical recording area 7, an information recording portion that is the same as that of an ordinary CD-R or a DVD-R is formed. That is, guide grooves 7a are formed at predetermined pitches for a surface on a side opposite to a laser light incident surface (lower side in the drawing) of the disk-like substrate 1 and a recording layer and a reflecting layer are formed on the guide grooves 7a. Note that, in this embodiment, the light absorbing layer 12 and the light reflecting layer 11 are used as the recording layer and the reflecting layer, respectively.

Also, as shown in FIG. 3(b), the sample introducing opening 6a is under an opened state when viewed from above, the other portion of flow passage is covered with the cover and is under a hermetically sealed state, and a concave portion is formed for a part of the cover 8 to thereby make it possible for the liquid reservoir portion 6b to reserve a sufficient amount of the sample liquid. Note that, in the present invention, the concave portion is not necessarily provided for the cover 8 so long as it is possible to obtain a sufficient capacity of the liquid reservoir portion 6b and the cover 8 may have a planar shape.

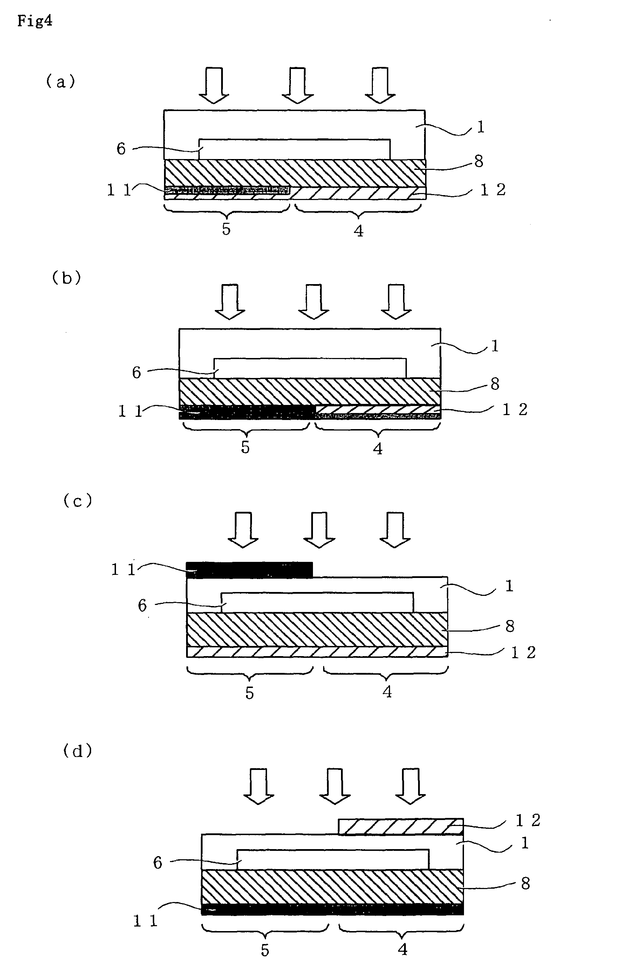

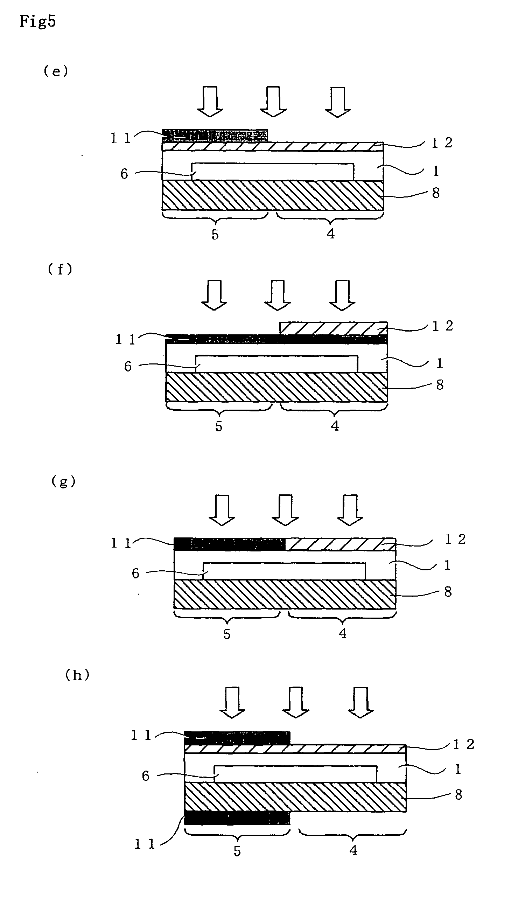

In the present invention, a temperature difference between the high temperature zone 4 and the low temperature zone 5 is attributed to the significant shift in the heating efficiency from the electromagnetic wave. Thus, as an arrangement of the disposition of the light absorbing layer 12 and the light reflecting layer 11 in the high temperature zone 4 and the low temperature zone 5, aside from the mode described above, it is possible to give the modes shown in FIGS. 4(a) to 4(d) and FIGS. 5(e) to 5(h).

For instance, in the mode shown in FIG. 4(a), the light reflecting layer 11 is disposed for a part (low temperature zone) of a surface opposite to a side (indicated with arrows in the drawing), on which the electromagnetic wave is irradiated, of the disk-like substrate 1 and the light absorbing layer 12 is disposed thereon for the entire surface of the disk-like substrate 1. In this mode, in order to further increase the temperature difference between the high temperature zone 4 and the low temperature zone 5, it is preferable that the electromagnetic wave is irradiated from the upper side as shown in the drawing.

In the mode shown in FIG. 4(b), the light absorbing layer 12 is disposed for a part (high temperature zone) of a surface opposite to a side (indicated with arrows in the drawing), on which the electromagnetic wave is irradiated, of the disk-like substrate 1 and the light reflecting layer 11 is disposed thereon for the entire surface of the disk-like substrate 1. In this mode, it is impossible to heat the high temperature zone when the electromagnetic wave is irradiated from a surface side (lower side in the drawing) on which the light reflecting layer 11 is disposed, so the irradiating direction of the electromagnetic wave is limited to the direction from the upper side shown in the drawing. This mode has a feature in which the structure of the light absorbing layer 12 and the light reflecting layer 11 is analogous to that of a CD-R. Also, it is possible to use the light absorbing layer 12 as the recording layer in the optical recording area, and/or to use the light reflecting layer 11 as the reflecting layer in the optical recording area.

The mode shown in FIG. 4(c) is an example where the light absorbing layer and the light reflecting layer are disposed for different surfaces of the disk-like substrate, with the light reflecting layer 11 being disposed for a part of a surface on a side (indicated with arrows in the drawing), on which the electromagnetic wave is irradiated, of the disk-like substrate 1 and the light absorbing layer 12 being disposed for the entire surface on an opposite side. In this mode, in order to further increase the temperature difference between the high temperature zone 4 and the low temperature zone 5, it is preferable that the electromagnetic wave is irradiated from the upper side as shown in the drawing. In this mode, it becomes possible to prevent a situation where heat generated by the light absorbing layer 12 escapes to other areas by propagating through the light reflecting layer 11. Also, in the case of a combination of materials in which the light absorbing layer 12 and the light reflecting layer 11 react each other, it becomes possible to avoid the reaction because the both layers do not physically contact with each other.

The mode shown in FIG. 4 (d) is a construction opposite to that shown in FIG. 4 (c), that is, the light absorbing layer 12 is disposed for a part of a surface on a side (indicated with arrows in the drawing), on which the electromagnetic wave is irradiated, of the disk-like substrate 1 and the light reflecting layer 11 is disposed for the entire surface on an opposite side. In this mode, when the electromagnetic wave is irradiated from a surface side (lower side in the drawing) on which the light reflecting layer 11 is disposed, it is impossible to heat the high temperature zone, so the irradiating direction of the electromagnetic wave is limited to the direction from the upper side shown in the drawing. In this mode, in the case of a combination of materials in which the light absorbing layer 12 and the light reflecting layer 11 react with each other, it becomes possible to avoid the reaction because the both layers do not physically contact with each other.

In the mode shown in FIG. 5(e), the light absorbing layer 12 is disposed for the entire surface on a side (indicated with arrows in the drawing), on which the electromagnetic wave is irradiated, of the disk-like substrate 1 and the light reflecting layer 11 is disposed for a part of a surface of the light absorbing layer 12. In this mode, in order to further increase the temperature difference between the high temperature zone 4 and the low temperature zone 5, it is preferable that the electromagnetic wave is irradiated from the upper side as shown in the drawing. In this mode, the electromagnetic wave hits the light absorbing layer 12 and the light reflecting layer 11 first, so it becomes possible to efficiently prevent a situation where the electromagnetic wave hits the disk-like substrate 1 and the flow passage 6 compared with the mode shown in FIG. 4 (c). Also, like in the case of the mode shown in FIG. 4 (b), this mode has a feature that the structure of the light absorbing layer 12 and the light reflecting layer 11 is analogous to that of a CD-R. Also, it is possible to use the light absorbing layer 12 as the recording layer in the optical recording area, and/or to use the light reflecting layer 11 as the reflecting layer in the optical recording area.

The mode shown in FIG. 5 (f) is a construction opposite to that shown in FIG. 5 (e), that is, the light reflecting layer 11 is disposed for the entire surface on a side (indicated with arrows in the drawing), on which an electromagnetic wave is irradiated, of the disk-like substrate 1 and the light absorbing layer 12 is disposed for a part of a surface of the light reflecting layer 11. In this mode, when the electromagnetic wave is irradiated from the lower side in the drawing, it is impossible to heat the high temperature zone, so the irradiating direction of the electromagnetic wave is limited to the direction from the upper side shown in the drawing. In this mode, the electromagnetic wave hits the light absorbing layer 12 and the light reflecting layer 11 first, so it becomes possible to efficiently prevent a situation where the electromagnetic wave hits the disk-like substrate 1 and the flow passage 6.

The mode shown in FIG. 5(g) is a construction in which the light absorbing layer 12 and the light reflecting layer 11 do not overlap each other, that is, the light reflecting layer 11 and the light absorbing layer 12 are each disposed for a part of a surface on a side (indicated with arrows in the drawing), on which the electromagnetic wave is irradiated, of the disk-like substrate 1 so as not to overlap each other. In this mode, in order to prevent a situation where the electromagnetic wave directly hits the disk-like substrate 1 and the flow passage 6, it is preferable that the electromagnetic wave is irradiated from the upper side as shown in the drawing, although it is also possible to irradiate the electromagnetic wave from the lower side.

Aside from the modes described above, it is also possible to obtain a mode having the advantages of the constructions shown in FIGS. 4 (a) to 5 (g) by combining the constructions with each other. For instance, in the mode shown in FIG. 5(h), the light absorbing layer 12 is disposed for the entire surface on a side (indicated with arrows in the drawing), on which the electromagnetic wave is irradiated, of the disk-like substrate 1, the light reflecting layer 11 is disposed for a part of a surface of the light absorbing layer 12, and the light reflecting layer 11 is also disposed for a part of a surface on an opposite side of the disk-like substrate 1. This mode is considered to be a combination of the mode shown in FIG. 5(e) and the mode shown in FIG. 4(c).

The material of the disk-like substrate 1 constituting the disk-like sample analyzing medium 10 according to the present invention is not specifically limited, although a material that has heat resistance and maintains its shape with stability at around 100 to 150°C is preferably used and a material that has corrosion resistance and will not be corroded by a reaction liquid or the like for performing a chemical or biochemical reaction is more preferably used. Also, a material having a property, with which the electromagnetic wave is not absorbed or reflected to be transmitted, is preferably used, although it is possible to use a material having a property, with which the electromagnetic wave is absorbed or reflected, for a part of the substrate to form the light absorbing layer or the light reflecting layer. More specifically, it is possible to cite various kinds of plastics, glass, and the like as examples. Also, it is basically preferable that the final external form of the disk-like substrate 1 and the like are pursuant to the Japanese Industrial Standards (JIS), Compact Disk Digital Audio System (S8605-1993 (IEC908:1987)), and/or a DVD FLLC (Format/Logo Licensing Corporation) standard.

Also, it is possible to form the flow passage 6 in the analyzing area 3 by forming a predetermined-sized groove for a surface of the disk-like substrate 1 with a general technique, such as cutting machining, etching, or hot embossing, and then bonding another substrate or a film to the groove as a cover. It is sufficient that the flow passage 6 has a width and depth with which a capillary phenomenon occurs in which the sample liquid or the like is sufficiently sucked and filled into the whole of the flow passage, and it is preferable that the flow passage 6 has a width and depth that are uniform across the entire flow passage. More specifically, the width is 10 to 1000 µm or preferably 50 to 200 µm and the depth is 10 to 500 µm or preferably 30 to 100 µm. Note that, it is sufficient that the length of the flow passage 6, the number of times of passage through the high temperature zone 4 and the low temperature zone 5, and the like are set as appropriate so that it is possible to efficiently perform intended analysis. Although it is not generalized, when PCR is performed, for instance, it is preferable that the setting is made so that the sample liquid passes through each of the high temperature zone 4 and the low temperature zone 5 for 10 to 40 times.

It is sufficient that the sample introducing opening 6a has a size (diameter) with which it is possible to pour a sample or a buffer liquid with a pouring tool such as a micropipette. More specifically, the diameter is 0.1 to 1 mm. Also, it is preferable that the sample introducing opening 6a has a depth that is equal to the depth of the flow passage 6.

Also, it is preferable that the liquid reservoir portion 6b is formed for the flow passage 6. It is sufficient that the liquid reservoir portion 6b has a size (diameter) with which it functions as a liquid reservoir. More specifically, the diameter is 1 to 10 mm. Also, it is preferable that the liquid reservoir portion 6b has a depth that is equal to the depth of the flow passage 6. However, when desired to increase the capacity as the liquid reservoir using a small area, it is possible to arbitrarily increase the depth unless the thickness of the substrate is exceeded.

The light absorbing layer 12 is not specifically limited so long as it contains at least one of an organic or inorganic pigment and/or dye that absorb an electromagnetic wave and perform heating. More specifically, as examples, it is possible to cite various dyes having motifs of molecular structure, such as an azo-based dye, a cyanine-based dye, a quinone-based dye, a phthalocyanine-based dye, an indigo-based dye, and a triarylmethane-based dye, and various inorganic compounds such as graphite and a metallic compound. Accordingly, when the azo-based dye, the cyanine-based dye, or the phthalocyanine-based dye is used, for instance, it also becomes possible to use the light absorbing layer 12 to function as the recording layer of the optical recording area 7.

The light reflecting layer 11 is not specifically limited so long as it is made of a material that reflects an electromagnetic wave, and is generally an evaporated film or sputtered film of a metal. Examples of the metal are aluminum, gold, silver, platinum, an alloy of these metals and other metals, and the like. Accordingly, for instance, it is also possible to use the light reflecting layer 11 to function as the reflecting layer of the optical recording area 7.

It is possible to form the light absorbing layer 12 and the light reflecting layer 11 with a physical evaporation method, such as sputtering or ion plating, or a chemical evaporation method such as the plasma CVD.

It is basically sufficient that the protective layer 13 is made of a material that is the same as the material of the disk-like substrate, although transparency and corrosion resistance are not required in some constructions. In such a case, it is possible to use a plastic or the like that is inexpensive and has high workability, for instance. Also, when the light reflecting layer is to be corroded through contact with the light absorbing layer, it is also possible to provide a protective layer between the light reflecting layer and the light absorbing layer.

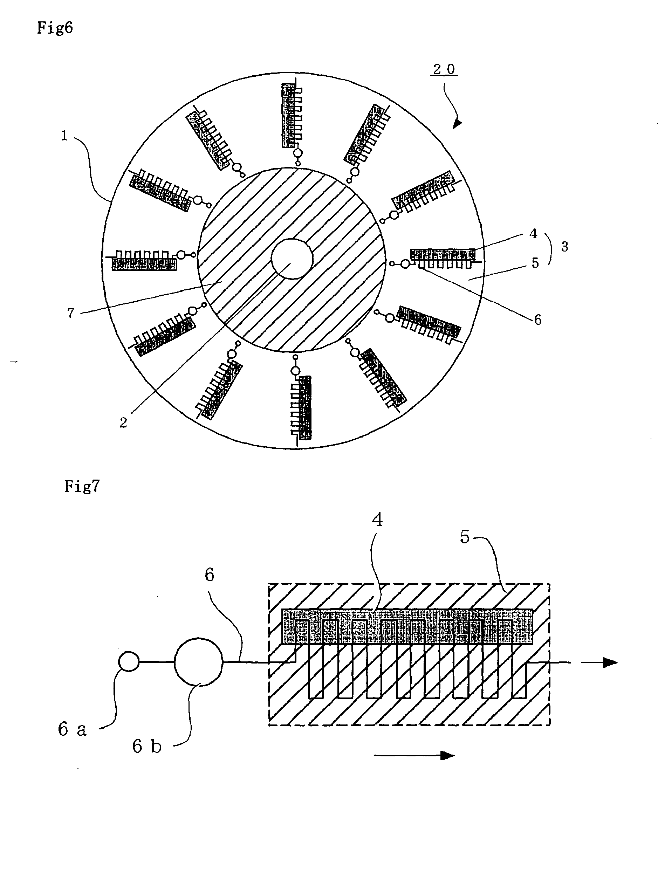

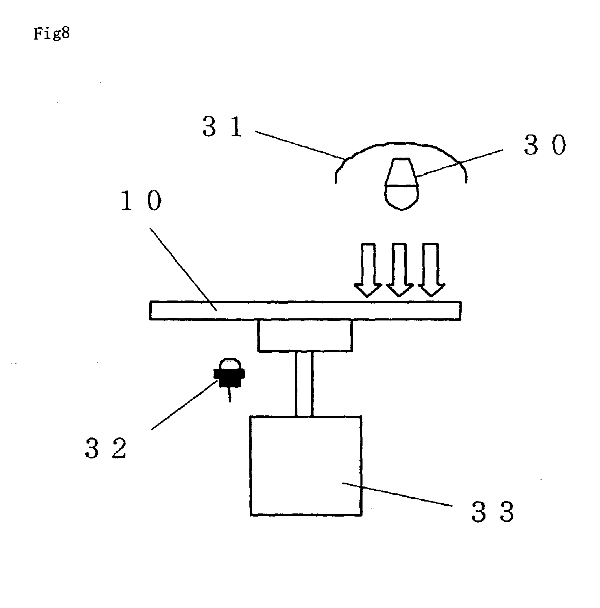

In FIGS. 6 and 7, another embodiment of the disk-like sample analyzing medium according to the present invention is shown. FIG. 6 is a plan view of the disk-like sample analyzing medium and FIG. 7 is an enlarged schematic diagram of a flow passage formed in the disk-like sample analyzing medium. Note that, in the following description of this embodiment, each portion that is substantially the same as a portion in the embodiment described above is given the same reference numeral and the description thereof will be simplified or omitted.

As shown in FIG. 6, a disk-like sample analyzing medium 20 differs from that in the embodiment described above in that multiple high temperature zones 4 are formed in an analyzing area 3 radially, that is, in a radial direction from the center of a disk-like substrate 1, a low temperature zone 5 is formed in the remaining portion, and flow passages 6 are formed in the radius direction (radial direction) of the disk-like substrate 1 so as to alternately meander between the high temperature zones 4 and the low temperature zone 5. Also, as shown in FIG. 7, a sample liquid is poured from a sample introducing opening 6a, that is provided in the flow passage 6 on the center side of the disk-like substrate 1, is reserved in a liquid reservoir portion 6b existing at an immediately downstream position, moves in the flow passage 6 due to a centrifugal force resulting from rotation of the disk, and passes through the high temperature zone 4 and the low temperature zone 5 alternately with multiple times.

This embodiment suits for a case where many flow passages are formed on the disk-like substrate. Also, when the high temperature zones are formed so as to have sufficient lengths in the radial direction, the dislocation of the flow passages in the radial direction hardly be a problem, so it becomes possible to alleviate required rate in accuracy for positioning in the radial direction.

By applying the disk-like sample analyzing medium according to the present invention to a sample analyzer to be described later or the like, it becomes possible to provide a thermal cycle to the sample liquid fed into the flow passage and can be suitably used for analysis, such as PCR, that requires the thermal cycle.

Also, by providing the optical recording area for the disk-like sample analyzing medium and writing an analytical condition and the like in the optical recording area in advance, it becomes possible not only to automate analysis but also to record results from the analysis and the like on the disk-like sample analyzing medium. Accordingly, it also becomes possible to perform operations from for analysis of a sample to for storage of a record of analysis information with one disk-like sample analyzing medium, which extremely facilitates management of data and the like. Also, when the recording layer formed in the optical recording area has a storage form using an organic dye that is the same as a dye used by a CD-R or a DVD-R, it is impossible to rewrite information that has been written onto the recording layer once, so it also becomes possible to prevent tampering of data and the like.

Next, the sample analyzer according to the present invention will be described. The sample analyzer according to the present invention performs analysis of a sample using the disk-like sample analyzing medium described above.

In FIG. 8, a schematic construction diagram showing an embodiment of the sample analyzer according to the present invention is shown. As shown in FIG. 8, the sample analyzer includes a disk rotating means 33 for supporting and rotating a disk-like sample analyzing medium 10, an electromagnetic wave irradiating means 30 for irradiating the disk-like sample analyzing medium 10 with an electromagnetic wave, and a laser light irradiating means 32 for irradiating laser light as inspection light that analyzes a sample. The electromagnetic wave irradiating means 30 is disposed so as to be capable of irradiating the whole of the disk-like sample analyzing medium 10 or at least the analyzing area 3 thereof with the electromagnetic wave and the laser light irradiating means 32 is disposed so as to be capable of irradiating at least the analyzing area 3 with the laser light.

In the sample analyzer, the disk-like sample analyzing medium 10 is rotated by the disk rotating means 33 at a predetermined rotational speed and a sample liquid poured from the sample introducing opening 6a and reserved in the liquid reservoir portion 6b moves in the flow passage 6 due to a centrifugal force resulting from the rotation of the disk. Also, through the radiation of the disk-like sample analyzing medium 10 with the electromagnetic wave by the electromagnetic wave irradiating means 30, the high temperature zone 4 provided in the analyzing area 3 of the disk-like sample analyzing medium 10 is heated and the increase in temperature is suppressed in the low temperature zone 5. As a result, it becomes possible to provide a thermal cycle to the sample liquid because of passage of the sample liquid alternately through the high temperature zone 4 and the low temperature zone 5.

In this embodiment, the electromagnetic wave irradiating means 30 is installed above the disk-like sample analyzing medium 10 and the laser light irradiating means 32 is installed below the disk-like sample analyzing medium 10 so that the electromagnetic wave and the laser light are respectively irradiated from different surface sides of the disk-like sample analyzing medium 10. According to this form, a necessity is eliminated to limit a used wavelength with consideration given to a situation, in which a peripheral circuit, such as a laser drive, is disposed close to the electromagnetic wave irradiating means and therefore are heated, and with consideration of the influence on the laser detection because of the wavelength of the electromagnetic wave emitted from the electromagnetic wave irradiating means 30.

Also, when the electromagnetic wave irradiating means 30 and the laser light irradiating means 32 are installed on the same surface side of the disk-like sample analyzing medium 10, it becomes possible to irradiate the electromagnetic wave and the laser light from the same direction. According to this embodiment, when an already-existing optical disk drive is used as the disk rotating means 33, for instance, by integrating the electromagnetic wave irradiating means 30 and the laser light irradiating means 32 on the same side of the disk, it is possible to use the optical disk drive as the disk rotating means in the present invention without altering the specification of the optical disk drive, so it becomes possible to reduce the cost of the disk rotating means.

Accordingly, it is possible to select the positional relations between the electromagnetic wave irradiating means 30 and the laser light irradiating means 32 with respect to the disk, as being appropriate in accordance with the influence of interaction therebetween, the shape of the used disk rotating means, and the like.

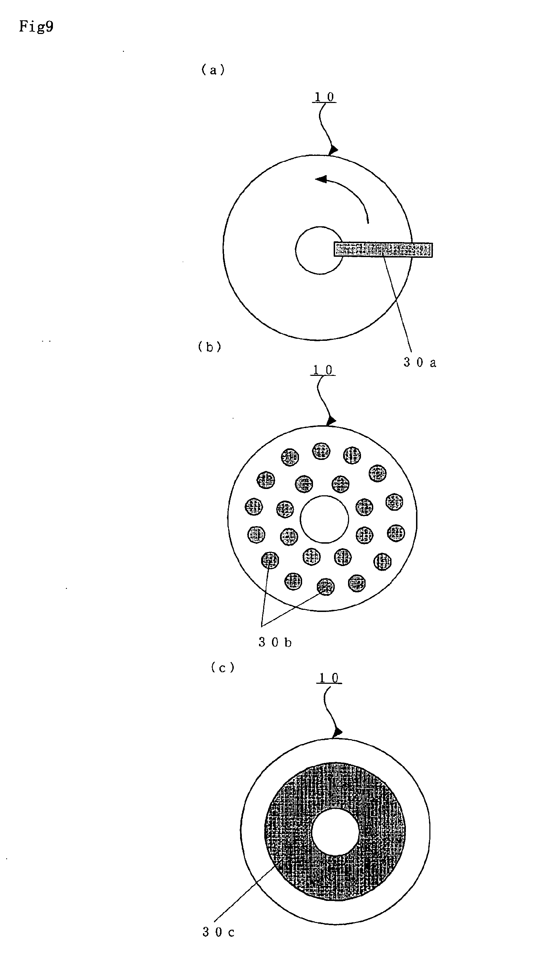

In FIG. 9, forms of the electromagnetic wave irradiating means 30 are shown. For instance, in the form shown in FIG. 9(a), a line-like light source 30a is installed above the disk-like sample analyzing medium 10 from the center of the disk-like sample analyzing medium 10 to the outside in the radial direction and the entire surface of the disk-like sample analyzing medium 10 is irradiated with the electromagnetic wave through rotation of the disk-like sample analyzing medium 10.

In the form shown in FIG. 9(b), multiple light sources 30b are installed in a scattered manner above the disk-like sample analyzing medium 10. With this form, it becomes possible to reduce the size of each light source, which makes it possible to attach the light source to the back of a case of the sample analyzer or the like, resulting in an easy installation of the light source. Also, it is possible to evenly irradiate the entire surface of the substrate even without utilizing the rotation of the substrate. Further, it is possible to control the irradiated light amount or its distribution through output adjustment or ON/OFF of each light source.

In the form shown in FIG. 9(c), a ring-like or arc-like light source 30c is installed above the disk-like sample analyzing medium 10 and it is possible to irradiate the disk-like sample analyzing medium 10 with an electromagnetic wave without unevenness.

It should be noted here that as necessary, efficiency may be increased by providing a reflecting plate 31 on the back side of the electromagnetic wave irradiating means 30 from a surface irradiating with the electromagnetic wave. Also, a shutter may shield an unnecessary portion.

The light source of the electromagnetic wave is not specifically limited so long as it emits continuous light containing a wavelength, at which absorption occurs at the light absorbing layer formed for the disk-like sample analyzing medium, and concrete examples thereof are a halogen lamp, a xenon lamp, a sheath heater, and the like.

On the other hand, the laser light described above is preferably used as the inspection light irradiated in order to analyze a sample, although a general light source that is used in an ordinary optical detection system may be used and examples thereof are a xenon lamp, a halogen lamp, and a semiconductor laser. Also, it is achievable to have an optical detection means by appropriately combining the inspection light irradiating means and an ordinary light-receiving means or a spectral means with each other, for analyzing the change in state of a sample moving in the flowpassage. In this case, examples of the light-receiving means are a photomultiplier, a CCD, a photodiode, and the like and examples of the spectral means are a prism, a filter, a grating, a slit, a beam splitter, a lens, a mirror, and the like.

### Examples

Hereinafter, the present invention will be described concretely based on examples, although the scope of the present invention is not limited to these examples.

### <Example 1>

A disk-like sample analyzing medium including a light absorbing layer disposed for the entire surface thereof was manufactured under the following conditions.

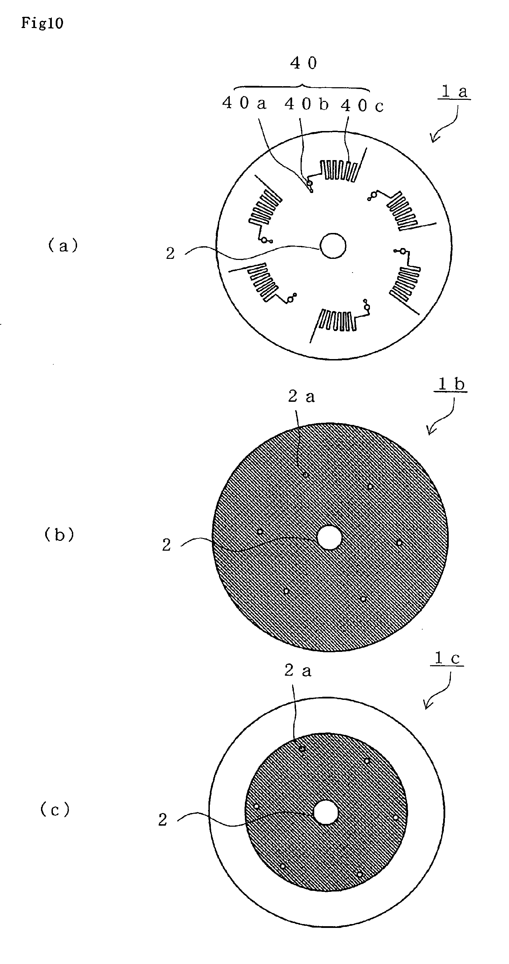

First, a disk-like substrate 1a shown in FIG. 10(a) was injection-molded using polyethylene terephthalate (PET) as a material in a disk shape with a diameter of 120 mm and having therein a center hole 2 with a diameter of 15 mm to be used for installation of the rotating means. Here, convex portions of a mold were transferred to the substrate, thereby forming, on the substrate 1a, concave portions 40 (40a, 40b, and 40c) with a depth of 50 µm that will respectively become a circle-like sample introducing opening with a diameter of 0.5 mm, a circle-like liquid reservoir portion with a diameter of 1 cm, and a bent-line-like flow passage with a width of 100 µm. Also, a disk-like substrate 1b shown in FIG. 10(b) having the same disk shape as the substrate 1a was injection-molded using PET as a material like in the case of the substrate 1a. An UV curable resin containing a black pigment was applied to the entire surface on one side of the substrate 1b through screen printing and was cured through radiation of UV, thereby obtaining a light absorbing layer. A transparent acrylic-based UV curing resin was spin-coated and was cured through UV radiation, thereby obtaining a protective layer. Following this, pouring openings 2a were formed at positions overlapping with the concave portions 40a formed on the substrate 1a to serve as the sample introducing openings. The substrate 1a and the substrate 1b formed in the manner described above were bonded together so that a substrate surface of the substrate 1a, on which the concave portions 40 have been formed, and a substrate surface of the substrate 1b, on which the UV curable resin containing the blackpigment has not been applied, formwall surfaces of the flow passages, thereby obtaining a disk-like sample analyzing medium that includes flow passages, into which samples are introduced, and a light absorbing layer that is disposed for the whole area of an external surface on one side of the disk and absorbs light.

### <Example 2>

A disk-like sample analyzing medium including a light absorbing layer and a light reflecting layer was manufactured under the following conditions.

First, a disk-like substrate 1c shown in FIG. 10(c) having the same disk shape as the disk-like substrate 1a described above was injection-molded using PET as a material. An UV curable resin containing a black pigment was applied to the entire surface on one side of the substrate 1c through screen printing and was cured through radiation of UV, thereby obtaining a light absorbing layer. Further, a predetermined area of the substrate 1c was film-coated with silver according to a sputtering method, thereby obtaining a light reflecting layer. A transparent acrylic-based UV curing resin was spin-coated and was cured through UV radiation, thereby forming a protective layer. Following this, pouring openings 2a were formed at positions overlapping with the concave portions 40a formed on the substrate 1a to serve as sample introducing openings. The substrate 1c and the substrate 1a formed in the manner described above were bonded together so that a substrate surface of the substrate 1a, on which the concave portions 40 have been formed, and a substrate surface of the substrate 1b, on which the UV curable resin containing the black pigment and silver have not been applied, form wall surfaces of the flow passages, thereby obtaining a disk-like sample analyzing mediumthat includes flow passages into which samples are introduced, a light absorbing layer that is disposed in an inner peripheral area of an external surface on one side of the disk and absorbs light, and a light reflecting layer that is disposed in an outer peripheral area of the external surface on the one side of the disk and reflects light.

### <Example 3>

Using a disk-like sample analyzing medium 1d including a light absorbing layer disposed for the entire surface thereof according to example 1, a sample analyzer including a disk-like sample analyzing medium, an electromagnetic wave irradiating means, a disk rotating means, and a laser light irradiating means was constructed.

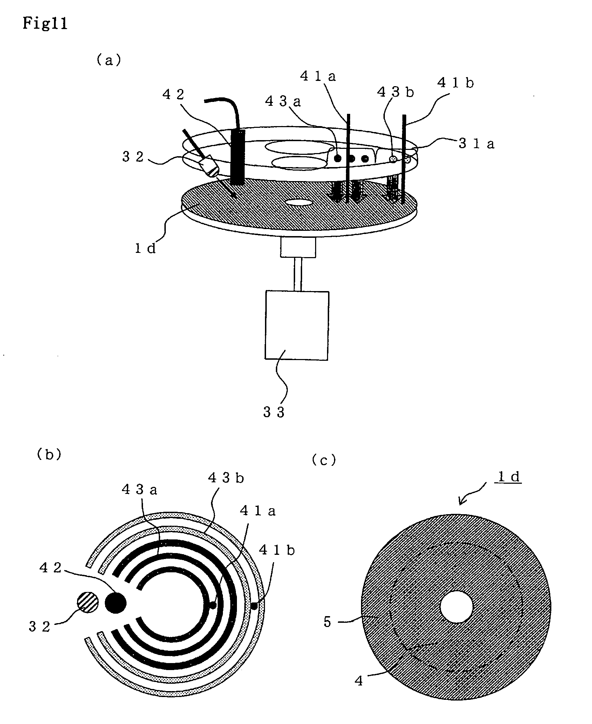

That is, as shown in a schematic diagram in FIG. 11(a), a 200 W infrared sheath heater 43, including a gold mirror 31a comprising a reflection plate having an independent reflection structure respectively for the inner peripheral portion and the outer peripheral portion, and concurrently including a multiple of heater lines 43a for the inner peripheral portion and a multiple of heater lines 43b for the outer peripheral portion each provided in the concentric manner, to which an independent control respectively for the inner peripheral portion and the outer peripheral portion is given, is disposed above the disk-like sample analyzing medium 1d as the electromagnetic wave irradiating means, while a disk rotating means 33 is disposed below the disk-like sample analyzing medium 1d to support and rotate the disk-like sample analyzingmedium.

In order to regulate the temperature of the disk surface, the heater lines 43a for the inner peripheral portion are disposed above the high temperature zone 4 of the disk-like sample analyzing medium 1d and the heater lines 43b for the outer peripheral portion are disposed above the low temperature zone 5 of the disk-like sample analyzing medium 1d. Also, thermocouples 41a and 41b constituting temperature sensors are respectively disposed so as to be positioned immediately above the high temperature zone 4 and the low temperature zone 5 of the disk-like sample analyzing medium. The disk was heated through PID control so that the temperature of the thermocouple for the inner peripheral portion became 100°C and the temperature of the thermocouple for the outer peripheral portion became 85°C. Here, in FIG. 11(b), relative positions of the thermocouples 41a and 41b, the heater lines 43a and 43b, the laser light irradiating means 32, and the light-receiving means 42 from above are shown. Also, in FIG. 11(c), relative positions of the high temperature zone 4 and the low temperature zone 5 of the disk-like sample analyzing medium 1d from above are shown.

The temperature of each portion of the substrate was measured using a non-contact type sensor equipped with a color temperature correction function and it was found that the temperature of the high temperature zone 4 of the disk-like sample analyzing medium 1d was 100°C and the temperature of the low temperature zone 5 thereof was 80°C.

### <Example 4>

Using a disk-like sample analyzing medium 1e including a light absorbing layer and a light reflecting layer according to example 2, a sample analyzer including a disk-like sample analyzing medium, an electromagnetic wave irradiating means, a disk rotating means, and a laser light irradiating means was constructed.

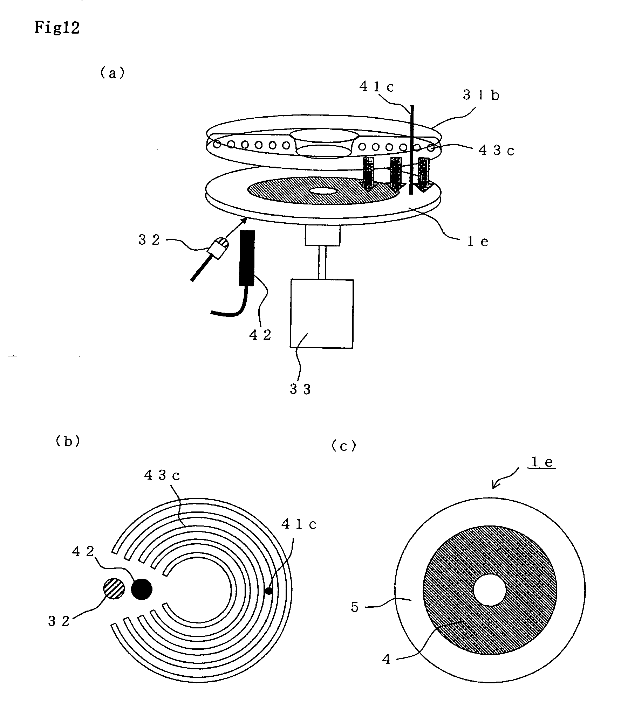

That is, as shown in a schematic diagram in FIG. 12 (a), a 200 W infrared sheath heater, including a gold mirror 31b comprising a reflection plate having a single reflection structure, and concurrently including a multiple of heater lines 43c provided in the concentric manner, is disposed above the disk-like sample analyzing medium 1e as the electromagnetic wave irradiating means, while a disk rotating means 33 is disposed below the disk-like sample analyzing medium 1d to support and rotate the disk-like sample analyzing medium.

In order to regulate the temperature of the disk surface, the heater lines 43c are disposed for the whole area of the upper surface of the disk-like sample analyzing medium 1e. Also, a thermocouple 41c constituting a temperature sensor is disposed so as to be positioned immediately above the low temperature zone 5 of the disk-like sample analyzing medium. The disk was heated through PID control so that the thermocouple temperature became 100°C. Here, in FIG. 12 (b), relative positions of the thermocouple 41c, the heater lines 43c, the laser light irradiating means 32, and the light-receiving means 42 from above are shown. Also, in FIG. 12 (c), relative positions of the high temperature zone 4 and the low temperature zone 5 of the disk-like sample analyzing medium 1e from above are shown.

The temperature of each portion of the substrate was measured using a non-contact type sensor equipped with a color temperature correction function and it was found that the temperature of the high temperature zone 4 of the disk-like sample analyzing medium was 100°C and the temperature of the low temperature zone 5 thereof was 80°C.

### INDUSTRIAL APPLICABILITY

According to the present invention, it becomes possible to provide a sample analyzer and a disk-like sample analyzing medium, with which it is possible to conduct an analytical work for tracking changes in state of a sample moving in a flow passage more simply, and it also becomes possible to supply a sample analyzer and a disk-like sample analyzing medium that can be manufactured at small cost through unification of; a detection system and a reaction system both relating to the analysis, and an output system and a drive system both relating to the apparatus, into a compact system. In particular, the present invention suits for analysis of a sample in the field of chemistry, biology, biochemistry, or the like and is also usable as a PCR apparatus that performs PCR or the like on a rotating disk.

## Claims

1. A sample analyzer comprising:
a disk-like sample analyzing medium including a flow passage to which a sample to be analyzed is introduced, the flow passage being formed in a disk-like substrate;
a disk rotating means for supporting and rotating the disk-like sample analyzing medium to cause the sample introduced into the flow passage to flow by a centrifugal force;
a heating means for heating the disk-like sample analyzing medium to form zones having different temperatures; and
an inspection light irradiating means for irradiating the flow passage of the disk-like sample analyzing medium with inspection light to analyze the sample,
wherein the sample flowing in the flow passage passes through the zones having the different temperatures formed by the heating means.

2. A sample analyzer according to claim 1,
wherein the zones having the different temperatures are divided with reference to a predetermined temperature into a high temperature zone, whose temperature is higher than the predetermined temperature, and a low temperature zone, whose temperature is lower than the predetermined temperature, and the sample flowing in the flow passage repeatedly passes through the high temperature zone and the low temperature zone.

3. A sample analyzer according to claim 1 or 2,
wherein the heating means is constructed using an electromagnetic wave irradiating means and the inspection light irradiating means is constructed using a laser light irradiating means.

4. A sample analyzer according to claim 3,
wherein the electromagnetic wave irradiating means and the laser light irradiating means are disposed so as to irradiate the disk-like sample analyzing medium from different surface sides, respectively.

5. A sample analyzer according to claim 3,
wherein the electromagnetic wave irradiating means and the laser light irradiating means are disposed so as to irradiate the disk-like sample analyzing medium from the same surface sides, respectively.

6. A sample analyzer according to any one of claims 3 to 5,
wherein the electromagnetic wave irradiating means includes a plurality of light sources.

7. A sample analyzer according to any one of claims 3 to 6,
wherein the electromagnetic wave irradiating means has one of a line-like shape, a ring-like shape, and an arc-like shape.

8. A disk-like sample analyzing medium applied to the sample analyzer according to one of claims 1 to 7, comprising:
a disk-like substrate; and
a flow passage to which a sample to be analyzed is introduced, the flow passage being formed in the disk-like substrate,
wherein the flow passage is formed in a shape with which, when the sample has been introduced and the disk-like substrate is rotated, the sample flows along the flow passage by a centrifugal force and repeatedly passes through the zones having the different temperatures formed by the heating means.

9. A disk-like sample analyzing medium according to claim 8,
wherein the zones having the different temperatures are divided with reference to a predetermined temperature into a high temperature zone, whose temperature is higher than the predetermined temperature, and a low temperature zone, whose temperature is lower than the predetermined temperature, and a light absorbing layer that absorbs light irradiated from the electromagnetic wave irradiating means is provided for the high temperature zone.

10. A disk-like sample analyzing medium according to claim 8 or 9,
wherein the zones having the different temperatures are divided with reference to a predetermined temperature into a high temperature zone, whose temperature is higher than the predetermined temperature, and a low temperature zone, whose temperature is lower than the predetermined temperature, and a light reflecting layer that reflects light irradiated from the electromagnetic wave irradiating means is provided for the low temperature zone.

11. A disk-like sample analyzing medium according to claim 9 or 10,
wherein at least one of the light absorbing layer and the light reflecting layer is disposed across both of the high temperature zone and the low temperature zone.

12. A disk-like sample analyzing medium according to any one of claims 9 to 11,
wherein a recording area and an analyzing area are further provided for the disk-like substrate, and
wherein pre-pits or pre-grooves are formed in the recording area and the analyzing area includes the high temperature zone and the low temperature zone.
